# EUROPEAN PATENT APPLICATION

(11) **EP 4 274 061 A1**
(43) Date of publication of application: **08.11.2023**
(21) Application number: 23168334.3
(22) Date of filing: 17.04.2023
(51) Int. Cl.: H02K 1/278, H02K 21/16, H02K 29/03

(54) **ELECTRIC MACHINE HAVING ASYMMETRIC MAGNET ARRANGEMENT**

(30) Priority: 05.05.2022 US 202217737683
(71) Applicant: GE Aviation Systems LLC, Grand Rapids, MI 49512 (US)
(72) Inventor: LEE, Seong Taek, Grand Rapids, 49512 (US)
(74) Representative: Openshaw & Co.

(57) **Abstract**

A rotor assembly (212) comprising rotatable element defining a periphery (219), a set of first permanent magnets (221) and a set of second permanent magnets (222) alternately circumferentially spaced about the periphery (219). The first permanent magnets (221) are symmetrically spaced from each other, the second permanent magnets (222) are symmetrically spaced from each other, and each second permanent magnet (222) is disposed between and asymmetrically spaced from a respective pair of immediately adjacent first permanent magnets (221).

## Description

### CROSS-REFERENCE TO RELATED APPLICATIONS

The present application claims the benefit of US Patent Application No. 17/737,683, filed May 5, 2022, which is incorporated herein by reference, in its entirety.

### TECHNICAL FIELD

This disclosure generally relates to an electric machine, and more specifically to a rotor assembly for the electric machine.

### BACKGROUND

Electric machines, such as electric motors or electric generators, are used in energy conversion. For example, in the aircraft industry, it is common to find an electric motor having a combination of motor and generator modes, where the electric machine, in motor mode, is used to start an aircraft engine, and, depending on the mode, can additional function as a generator to supply electrical power to the aircraft systems. The electric machine can further drive other portions of the aircraft engine such as a forward fan or a propeller. Regardless of the mode, an electric machine typically includes a stator with windings that cooperate with a rotor core having permanent magnets and driven to rotate by a source of rotation, which for a generator can be a gas turbine engine or for a motor can be the stator.

Exemplary electric machines can include a main generator, exciter, and a permanent magnet generator (PMG). The PMG is used to power the stator of the exciter. In addition to this main electric generator PMG, additional PMGs can be utilized to power the on-board aircraft flight computers or other electrical loads of the aircraft.

### BRIEF DESCRIPTION OF THE DRAWINGS

A full and enabling disclosure of the present description, including the best mode thereof, directed to one of ordinary skill in the art, is set forth in the specification, which refers to the appended FIGS., in which:
FIG. 1 is an isometric view of a gas turbine engine having an electric machine, in accordance with various aspects described herein.
FIG. 2 is an isometric view of an exterior of the electric machine of FIG. 1, in accordance with various aspects described herein.
FIG. 3 is a schematic cross-sectional view of the electric machine of FIG. 2, taken along line III-III of FIG. 2, in accordance with various aspects described herein.
FIG. 4 is a section view of a rotor and stator assembly of a conventional electric machine.
FIG. 5 is a sectional view of a non-limiting aspect of an electric machine, such as a SPM type synchronous motor, in accordance with various aspects as described herein.
FIG. 6 is a sectional view of a non-limiting aspect of an electric machine, such as an IPM type synchronous motor, in accordance with various aspects as described herein.
FIG. 7 is a method of forming the electric machine of FIG. 5, in accordance with various aspects as described herein.

### DETAILED DESCRIPTION

While "a set of' various elements will be described, it will be understood that "a set" can include any number of the respective elements, including only one element. As used herein, the terms "axial" or "axially" refer to a dimension along a longitudinal axis of a generator or along a longitudinal axis of a component disposed within the generator.

As used herein, the terms "radial" or "radially" refer to a dimension extending between a center longitudinal axis, an outer circumference, or a circular or annular component disposed thereof. The use of the terms "proximal" or "proximally," either by themselves or in conjunction with the terms "radial" or "radially," refers to moving in a direction toward the center longitudinal axis, or a component being relatively closer to the center longitudinal axis as compared to another component.

All directional references (e.g., radial, axial, upper, lower, upward, downward, left, right, lateral, front, back, top, bottom, above, below, vertical, horizontal, clockwise, counterclockwise) are only used for identification purposes to aid the reader's understanding of the disclosure, and do not create limitations, particularly as to the position, orientation, or use thereof.

Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other.

Aspects of the disclosure described herein are directed to an electric machine, and more specifically to a rotor assembly for an electric machine. The rotor assembly, as described herein, can include a rotatable element defining a rotational axis and a periphery. A set of first permanent magnets and a set of second permanent magnets can be alternately spaced about the periphery.

As used herein, the phrase "magnetic pole" can refer to any region within the rotor assembly defined by magnetic properties that generate a magnetic pole. For example, the magnetic poles can be defined by a region of the rotor assembly magnetized by a magnetic element of the rotor assembly such as, but not limited to, a permanent magnet, an energizable or electromagnetic rotor winding that gains magnetic properties when energized by electric current, or a magnetic material.

As used herein, "magnet", or the like, can refer to any element of the rotor assembly including magnetic properties configured to generate a magnetic field.

As used herein, the term "interpolar" can refer the space or connection between magnetic poles. For example, two adjacent first permanent magnets of the first set of permanent magnets can define two magnetic poles such a second permanent magnet of the second set of permanent magnets disposed between the two adjacent first permanent magnets can define an interpolar region between the two adjacent first permanent magnets.

For the purposes of illustration, an exemplary component will be described in the form of an electric machine, specifically a synchronous generator, for a gas turbine engine and having a rotor assembly as described herein. It will be appreciated however, that the electric machine can be in the form of a generator, a motor, a PMG, a Surface Permanent Magnet generator (SPM), Interior Permanent Magnet (IPM) electric machine, or a starter/generator (S/G) in non-limiting examples. As will be understood, a SPM type electric machine employs a set of magnets affixed to an outer or peripheral surface of a rotor, while IPM type electric machines employ a set of magnets disposed within the rotor, for example in slots defined by laminations forming the rotor. It will be further understood, however, that aspects of the disclosure described herein are not so limited and can have general applicability within other electric machines or systems. For example, the disclosure can have applicability for systems in other engines or vehicles, and may be used to provide benefits in industrial, commercial, and residential applications.

Conventional synchronous generators are a major source of commercial electrical energy. They are commonly used to convert the mechanical power output of steam turbines, gas turbines, reciprocating engines and hydro turbines into electrical power. Typically, most synchronous generators have a rotating assembly in the center of the generator, referred to as a "rotor" or "rotor assembly" which can include a rotatable shaft and a "rotor core" including a set of magnets. The magnets are typically evenly circumferentially spaced from each other along a periphery of the rotor core. A stationary armature, referred to as a stator, typically circumscribes the rotor and can include a set of armature windings. The armature windings can be wound around a set of posts or stator teeth defined along the stator, and can be disposed in a set of axially extending elongate slots defined between pairs of immediately adjacent stator teeth. The armature windings can include a set of conductors, wherein the number of conductors defines the number of electrical phases of the output. For example, a conventional stator can have a set of 3 armature windings circumferentially spaced about the rotor (e.g., spaced 120-degrees apart from each other), and can be used to power a typical 3-phase AC power circuit.

The set of magnets typically provide a strong permanent magnetic field around the rotor. This magnetic field reacts with a rotating magnetic field developed by the stator. The rotating magnetic field can be generated by an alternating current provided through the stator windings. Preferably, PMGs should provide a voltage output with low peak-to-peak ripple components before or after rectifying circuit in any operating condition. This ripple signal is based on phase conduction of the stator winding, stator and air-gap flux shape.

One conventional synchronous generator arrangement is a surface permanent magnet (SPM) type synchronous generator, in which permanent magnets are disposed on the surface of the rotor core. In such SPM generators, a magnetic torque produced by the permanent magnet is typically at a maximum when the magnetic field produced by the permanent magnets and the armature current differ in phase by 90°, that is, when the interpolar gaps on the rotor and the stator teeth oppose each other so that the current supplied to the stator windings is at a maximum. Another conventional synchronous generator arrangement is an interior permanent magnet (IPM) type synchronous generator, in which the permanent magnets are arranged inside the rotor core.

Typically, the torque of an IPM or SPM synchronous generator includes a ripple torque component that is based on the harmonic component of the magnetic fields produced by the permanent magnets, the influence of harmonic components of the armature current, and the like. Additionally, conventional permanent magnet generators can also exhibit undesirable cogging torque due to the interaction between the permanent magnets or the rotor and stator slots of the generator. Cogging torque is position dependent and its periodicity per revolution can depend on the number of magnetic poles and the number of teeth on the stator. Cogging torque can also contribute to an undesired ripple on the output voltage signal of conventional PMGs.

Some conventional techniques to address these noted shortcomings include skewing the rotor magnets. Skewing the rotor magnets involves the angling of at least one rotor magnet along its axial extent with respect to the longitudinal axis of the rotor, such that a direction of extension of the permanent magnet is not parallel with respect to the longitudinal axis of the rotor. However, conventional techniques, such as skewing the rotor magnets, can add cost and complexity to the manufacturing process, and can reduce the motor counter-electromotive force, thereby resulting in an undesirable reduction in the running torque of the electric machine.

Aspects as described herein provide for an improved arrangement for synchronous motors and generators, such as PMGs, to produce high running torque with reduced ripple of the output voltage signal, as well as low cogging torque, while providing a small, lightweight, high-output, low-vibration, low-noise, and efficient device compared to conventional techniques.

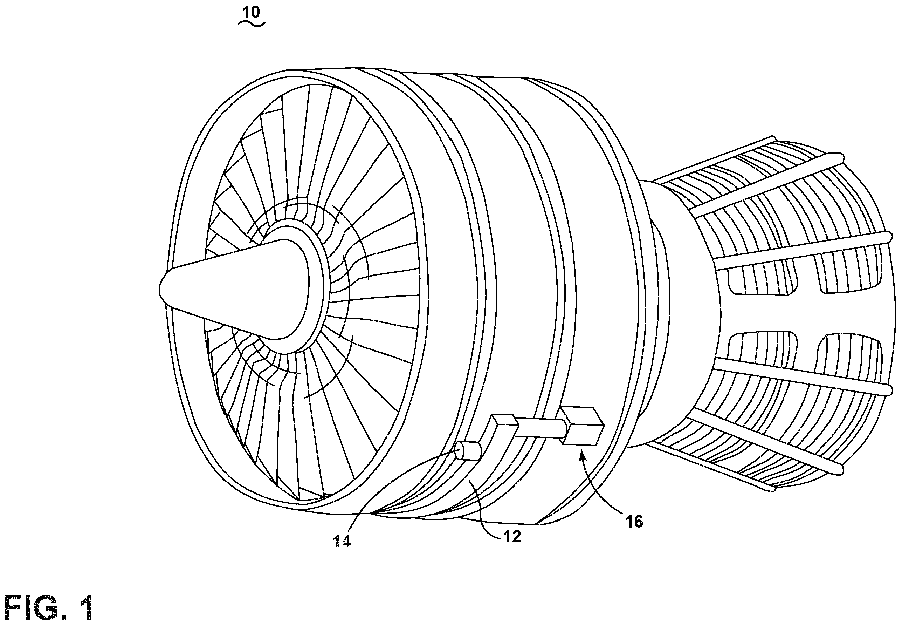

FIG. 1 illustrates a gas turbine engine 10 having an Accessory Gear Box (AGB) 12 and an electric machine, specifically a generator 14, according to an aspect of the disclosure. The gas turbine engine 10 can be a turbofan engine commonly used in modern commercial aviation. For example, the gas turbine engine 10 could include a turboprop or turboshaft. The AGB 12 can be coupled to a turbine shaft (not shown) of the gas turbine engine 10 by way of a mechanical power take off 16. The gas turbine engine 10 can be any suitable gas turbine engine used in modern aviation. For example, the gas turbine engine 10 can be any of a variety of other known gas turbine engines such as a turboprop, turboshaft, or a counter-rotating turbine engine. The type and specifics of the gas turbine engine 10 are not germane to the disclosure and will not be described further herein. Further yet, although described in terms of the gas turbine engine 10, it will be appreciated that the generator 14 can be included within any suitable engine or prime mover. While a generator 14 is shown and described, it will be appreciated that the generator 14, can be any electric machine including, but not limited to, an electric motor, generator, or a starter/generator.

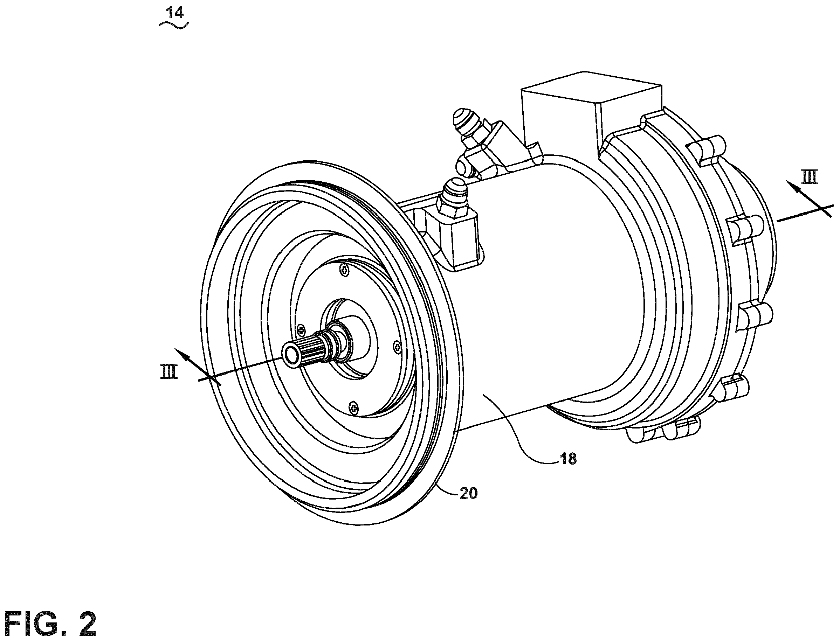

FIG. 2 illustrates a non-limiting example generator 14 and its housing 18 in accordance with aspects of the disclosure. The generator 14 can include a clamping interface 20, used to clamp the generator 14 to the AGB 12 (FIG. 1). A set of electrical connections can be provided on the exterior of the generator 14 to provide for the transfer of electrical power to and from the generator 14. The set of electrical connections can be further connected by cables to an electrical power distribution node of an aircraft having the gas turbine engine 10 to power various items on the aircraft, such as lights and seat-back monitors.

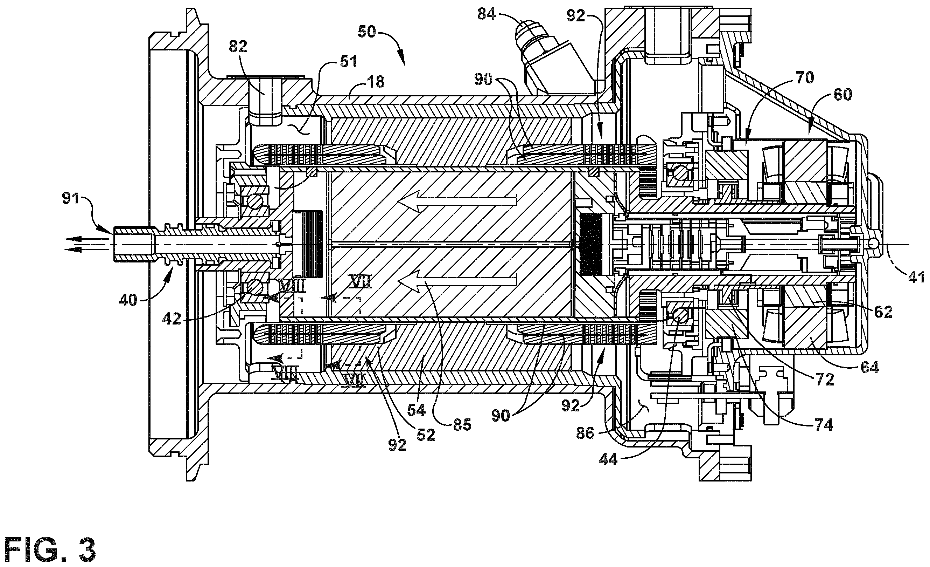

A non-limiting interior of the generator 14 is best seen in FIG. 3, which is a cross-sectional view of the generator 14 shown in FIG. 2 taken along line III-III. A drive shaft 40 is located within the generator 14 and is the primary structure for supporting a variety of components. The drive shaft 40 can have a single diameter or one that can vary along its length. The drive shaft 40 is supported by spaced bearings 42 and 44 and configured to rotate about a rotational axis 41. Several of the elements of the generator 14 have a fixed component and a rotating component, with the fixed component fixed relative to the housing 18 and with the rotating component being provided on, or rotatably fixed relative to the drive shaft 40. Examples of these elements can include a main machine 50 or electric machine, housed within a main machine cavity 51, an exciter 60, and a PMG 70. It will be appreciated that the electric machine can specifically be a Pulse-Width Modulation (PWM) driven electric machine, or any other suitable electric machine such as, but not limited to, a 50/60Hz sine wave machine. The corresponding rotating component comprises a main machine rotor 52, an exciter rotor 62, and a PMG rotor 72, respectively, and the corresponding fixed component comprises a main machine stator 54 or stator assembly, an exciter stator 64, and a PMG stator 74. In this manner, the main machine rotor 52, exciter rotor 62, and PMG rotor 72 are disposed on and co-rotate with the drive shaft 40. The fixed components can be mounted to any suitable part of the housing 18, and include the main machine stator 54, exciter stator 64, and PMG stator 74. Collectively, the fixed components define an interior through which the drive shaft 40 extends and rotates relative to.

It will be understood that the main machine rotor 52, exciter rotor 62, and PMG rotor 72 can have a set of rotor poles, and that the main machine stator 54, exciter stator 64, and PMG stator 74 can have a set of stator poles. The set of rotor poles can generate a set of magnetic fields relative to the set of stator poles, such that the rotation of the rotor magnetic fields relative to the stator poles generate current in the respective stator components.

At least one of the rotor poles and stator poles can be formed by a core with a post and wire wound about the post to form a winding, with the winding having at least one end turn 92 or end winding. Additionally, or alternatively, at least one of the main machine rotor 52, exciter rotor 62, or PMG rotor 72 can include a set of magnetic materials instead of the winding. The magnetic material can be, but is not limited to, a permanent magnet. In such a case, it will be appreciated that the set of magnetic materials can be referred to as the set of rotor poles configured to generate a set of magnetic fields relative to the set of stator poles.

It can be seen in FIG. 3 that the main machine stator 54 includes a stator core 89 having at least one post or tooth. A set of stator windings 90 are formed when a conductor or conductive wire is wound about the post or stator core 89. The set of windings 90 can also include a winding segment that extends across either the front or rear of the post or stator core 89, forming at least one end turn 92.

During power-generating operations, the drive shaft 40 is mechanically powered, driven, or rotated by a force, such as the mechanical energy of the engine 10, about a rotational axis 41. The relative rotational motion of the drive shaft 40 and co-rotating components, including at least the main machine rotor 52, relative to the fixed or stationary stator components, including at least the main machine stator 54, generates electrical power in the set of stator windings 90 due to the interaction of the generator 14 magnetic fields. The electrical power generated in the set of stator windings 90 can be conductively connected to, and further delivered to, at least one electrical load. In one non-limiting aspect, the generator 14 can provide the electrical power to a power distribution system or power distributed network.

Non-limiting aspects of the generator 14 can be any combination of known generators. For example, the main machine 50 can be either a synchronous or asynchronous generator. In addition to the aspects described herein, additional component, devices, or the like can be included to provide secondary generator 14 operations or functions. For instance, in one non-limiting aspect of the disclosure, the generator 14 can include electromechanical accessories, or other accessories driven from the rotation of the drive shaft 40, including but not limited to, an oil pump, a fluid compressor, a hydraulic pump, or the like.

Further non-limiting aspects of the generator 14 can also include oil cooling or an oil cooling system for controlling the supply of oil to the oil cooling system. The cooling oil can be used to dissipate heat generated by the electrical and mechanical functions of the generator 14. The oil system can also provide for lubrication of the generator 14. In one non-limiting example, the cooling system can further include, for example, a cooling fluid reservoir and various cooling passages. The drive shaft 40 can provide one or more flow channels or paths for the main machine rotor 52, exciter rotor 62, and PMG rotor 72. In one non-limiting example aspect of the cooling system, can receive a flow of cooling oil (shown as arrow 85) by way of a first port (e.g. 84 or 82) which can be provide via a main machine reservoir or coolant reservoir, to the drive shaft 40, to a shaft outlet port 91. While the generator 14 is shown as including the liquid coolant system, aspects of the disclosure are applicable to a generator 14 or without the liquid coolant system.

In the above-mentioned aircraft generator, the PMG assembly 70 is used to power the stator 64 of the exciter 60. In addition to this PMG assembly 70, there are other PMG assemblies 70 used to power the on-board aircraft flight computers, or a variety of other loads such as, but not limited to, actuators, electrical busses, batteries, deicing equipment, motors, flight controls, back up equipment, or any combination thereof.

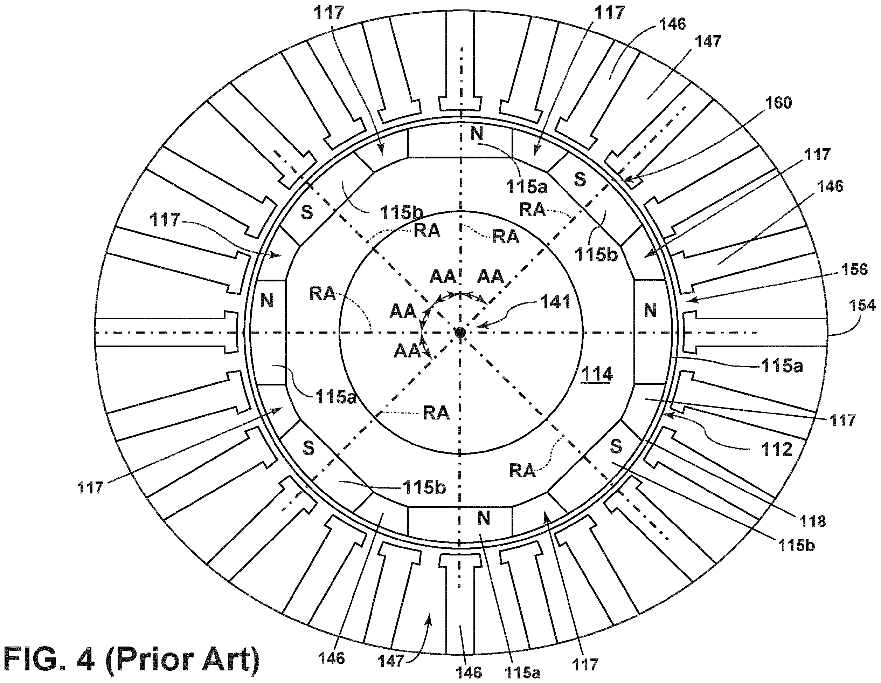

FIG. 4 is a simplified cross-section view of a portion of a conventional synchronous electric machine rotor/stator assembly, with parts omitted (e.g., the stator windings) for ease of description and understanding. A typical rotor assembly 112 includes a rotor core 114 having a set of permanent magnets 115a, 115b. The permanent magnets 115a, 115b are circumferentially arranged on the rotor core 114 at equal intervals along the circumferential direction of the rotor assembly 112. The permanent magnets 115a, 115b form magnetic poles defined by pairs of N-poles and S-poles. A respective gap region 117 is typically defined between each immediately adjacent permanent magnet 115a, 115b. In some applications an annular containment band 118 can be used to hold the magnets 115 in place. In the typical example shown, the rotor core 114 includes eight permanent magnets 115, with four N-pole magnets 115a, and four S-pole magnets 115b. It will be appreciated that the N-pole magnets 115a, and S-pole magnets 115b are equally sized, alternately arranged, and evenly spaced with respect to each other about the rotor core 114. That is, the permanent magnets 115a, 115b are arranged in a circumferentially alternating pattern such that an N-pole magnet 115a is disposed between, and evenly spaced from, any two adjacent S-pole magnets 115b, and vice versa.

For example, a radial axis RA can extend orthogonally from an axis of rotation 141 of the rotor core 114, through a center of each respective magnet 115a, 115b to thereby define a respective angle AA between each pair of adjacent radial axes RA. Typically, because the magnets 115 are evenly circumferentially spaced about the rotor core 114, the respective angle AA defined between each pair of adjacent radial axes RA (i.e., between each adjacent magnet 115a, 115b) is equal to the remaining angles AA between the other respective immediately adjacent magnets 115a, 115b. Likewise, because the permanent magnets 115a, 115b are typically equal in circumferential width and evenly circumferentially spaced about the circumference of the rotor core 114, the respective gap regions 117 between adjacent permanent magnets 115a, 115b are typically equal in size to each other.

Typically, a stator core 154 will circumscribe the rotor core 114. Conventional stator cores 154 can define a bore 156 therethrough. The rotor core 114 is sized to be rotatably disposed or received within the bore 156. Typically, an air gap 160 can be defined between the rotor core 114 and the stator core 154. A set of inwardly facing stator teeth 146 are evenly circumferentially spaced to define a set of axially elongate stator slots 147 therebetween. A set of stator windings (omitted for clarity) is wrapped around the stator teeth 146 and disposed in the stator slots 147.

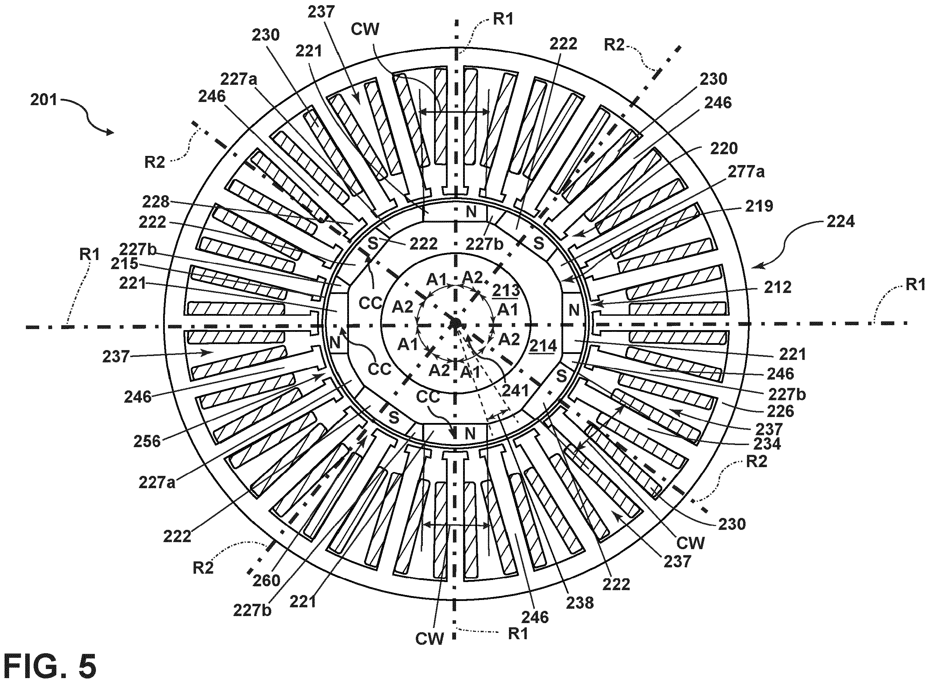

FIG. 5 is a simplified cross-section view of a non-limiting aspect of an SPM type electric machine 201 such as a synchronous motor or generator, including a rotor assembly 212 and a stator assembly 224. It will be appreciated that the rotor assembly 212 and stator assembly 224 of the electric machine 201 can be any suitable rotor or stator, respectively, for any suitable electric machine. For example, the rotor assembly 212 can be, but is not limited to, the main machine rotor 52, exciter rotor 62, the PMG rotor 72, or any other suitable rotor such as, but not limited to, an SPM type rotor. The stator assembly 224 can be, but is not limited to, the main machine stator 54, exciter stator 64, the PMG stator 74, or any other suitable stator such as, but not limited to, an SPM type stator. Similarly, the electric machine can be any suitable machine such as, but not limited to, the generator 14, an electric motor, or a starter/generator.

In non-limiting aspects, the rotor assembly 212 can be a rotor core 214 having a rotatable element 213, a set of magnets 220 including set of first permanent magnets 221 and a set of second permanent magnets 222, and a containment band 215. The rotatable element 213 can define a rotational axis 241 and a periphery 219. In non-limiting aspects, the containment band 215 can circumscribe the set of first permanent magnets 221 and a set of second permanent magnets 222. In some aspects, the rotatable element 213 can include a rotatable shaft.

The stator assembly 224 can circumscribe the rotor assembly 212. The stator assembly 224 can include a stator casing 226. A set of circumferentially spaced, posts or stator teeth 246 can be formed within the stator casing 226. The stator teeth 246 can extend inwardly in the radial direction from the casing 226 to a respective distal tip 228.

The stator teeth 246 cooperatively define an axial bore 256 through the stator assembly 224. The rotor assembly 212 can be rotatably disposed in the axial bore 256. As shown, an air gap 260 can be defined between the rotor assembly 212 and the stator assembly 224. For example, the air gap 260 can be defined between an outer radial limit of the rotor assembly 212 (e.g., at the containment band 215) and an inner radial limit of the stator assembly 224 (e.g., the distal tips 228 of the stator teeth 246). In non-limiting aspects, the air gap 260 can extend along an axial length of the rotor assembly 212. A set of windings or stator windings 230, similar to the set of stator windings 90 described herein, can be wound about the set of stator teeth 246. The stator teeth 246 can be can be evenly circumferentially spaced from each other to define a set of stator slots 237 therebetween.

Each respective stator tooth 246 can extend inwardly in the radial direction with respect to the axis of rotation 241 of the rotor assembly 212. For example, the set of stator teeth can be arranged to extend radially toward the axis of rotation 241 of the rotor core. Each stator tooth 246 can be arranged orthogonally with respect to the axis of rotation 241 of the rotor assembly 212 to thereby define an angle with respect to each immediately adjacent stator tooth 246.

Each stator slot 237 can thus define a circumferential stator slot pitch 238 defined by the angle between each adjacent stator teeth 246. In non-limiting aspects, the set of stator teeth 246 can be circumferentially spaced at a regular or equal angular interval or pitch with respect to each other to define the set of stator slots 237 having a common circumferential stator slot pitch 238.

The rotatable element 213 can be provided within the rotor assembly 212. The rotatable element 213 can comprise any suitable element configured to rotate about the rotational axis 241 such as, but not limited to, a drive shaft (e.g., the drive shaft 40), or a rotor core 214 fixed relative to the drive shaft and configured to co-rotate with the drive shaft. The rotatable element 213 can extend from the rotational axis 241 in the radial direction to the periphery 219 opposite an inner portion. The periphery 219 can define a surface provided along an outer radial limit of the rotatable element 213. As illustrated, the rotatable element 213 can be formed as a ring such that the periphery 219 is defined by an outer circumference of the ring.

The set of first permanent magnets 221 can have a first polarity (e.g., an N-polarity), and the set of second permanent magnets 222 can have a second polarity (e.g., an S-polarity). In aspects, the second polarity can be opposite the first polarity. The set of first permanent magnets 221 and the set of second permanent magnets 222 can include, but is not limited to, permanent magnetics, electromagnets, magnetically permeable material, or any combination thereof.

The set of first permanent magnets 221 and the set of second permanent magnets 222 can be can be coupled to the periphery 219 of the rotatable element 213 through any suitable coupling method such as, but not limited to, adhesion, welding, fastening, or any combination thereof. Additionally, or alternatively, at least a portion of the set of first permanent magnets 221 or the set of second permanent magnets 222 can be integrally formed with the rotatable element 213.

The set of first permanent magnets 221 and the set of second permanent magnets 222 can be alternately arranged and spaced with respect to each other along at least a portion of the periphery 219 of the rotatable element 213. For example, the set of first permanent magnets 221 and the set of second permanent magnets 222 can be arranged in a circumferentially alternating pattern (relative the rotational axis 241) such that a second permanent magnet 222 is provided between any two adjacent first permanent magnets 221, and vice versa. For example, each second permanent magnet 222 can be disposed circumferentially between a respective pair of first permanent magnets 221.

As illustrated, the set of first permanent magnets 221 and the set of second permanent magnets 222 can extend in the circumferential direction along the periphery 219 of the rotatable element 213, however, it will be further appreciated that the set of first permanent magnets 221 and the set of second permanent magnets 222 can also extend in the axial direction along the periphery 219. Specifically, the set of first permanent magnets 221 and the set of second permanent magnets 222 can extend in the axial direction parallel to the rotational axis 241.

The set of first permanent magnets 221 can be circumferentially evenly spaced from each other along the periphery 219, based on at a first equal interval between each successive first permanent magnet 221. Likewise, the set of second permanent magnets 222 can be circumferentially evenly spaced from each other along the periphery 219, based on at a second equal interval between each successive second permanent magnet 222. However, in non-limiting aspects, the set of second permanent magnets 222 are circumferentially offset or unevenly spaced with respect to the set of first permanent magnets 221.

Due to the circumferentially alternating pattern between the set of first permanent magnets 221 and the set of second permanent magnets 222, each second permanent magnet 222 is disposed circumferentially between two respective adjacent first permanent magnets 221. Additionally, due to the circumferentially uneven spacing between the first and second permanent magnets 221, 222, a set of first gap regions 227a can be defined between each respective second permanent magnet 222 and one respective immediately adjacent first permanent magnet 221. Furthermore, a set of second gap regions 227b can be defined between each respective second permanent magnet 222 and the other respective immediately adjacent first permanent magnet 221. The first gap regions 227a can each be the same size, and the second gap regions 227b can each be the same size. In non-limiting aspects, the first gap regions 227a can be a different size than the second gap regions 227b. For example, the first gap regions 227a are larger (e.g., greater circumferential length) than the second gap regions 227b.

In non-limiting aspects, the rotor assembly 212 can have a quantity N of first permanent magnets 221, and have a quantity M of second permanent magnets 222. In such aspects, the first permanent magnets 221 can be spaced from each other at an angular first interval defined by 360-degrees/N, and the second permanent magnets 222 can be spaced from each other at an angular second interval defined by 360-degrees/M. The second permanent magnets 222 can be circumferentially offset or unevenly spaced with respect to the set of first permanent magnets 221.

For instance, as illustrated, some non-limiting aspects can be arranged having eight magnets 220 including four first permanent magnets 221 and four second permanent magnets 222. In such an aspect, each successive first permanent magnet 221 can be spaced along the periphery 219 at 90-degree intervals from each other, and the set of second permanent magnets 222 can be spaced along the periphery 219 at 90-degree intervals from each other. However, the set of second permanent magnets 222 are circumferentially unevenly spaced from respective adjacent first permanent magnets 221. The respective first gap regions 227a can be defined between each second permanent magnet 222 and an immediately adjacent (e.g., in a clockwise direction) respective first permanent magnet 221, and the second gap regions 227b can be defined between each second permanent magnet 222 and the other immediately adjacent (e.g., in a counter-clockwise direction) respective first permanent magnet 221.

For example, in non-limiting aspects, each of the magnets 220 can define a respective circumferential width CW having a respective permanent magnet 220 circumferential center CC therebetween. In non-limiting aspects, the respective circumferential width CW of each of the magnets 220 can be substantially equal. A respective first radial axis R1 can extend from the rotational axis 241 through each respective first permanent magnet 221 circumferential center CC. A respective second radial axis R2 can extend from the rotational axis 241 through each respective second permanent magnet 222 circumferential center CC. In this way, due to the circumferentially uneven spacing, and alternating pattern, between the first and second permanent magnets 221, 222, a first angle A1 can be defined between the second radial axis R2 of each respective second permanent magnet 222 and the first radial axis R1 of an immediately adjacent first permanent magnet 221 (e.g., in the clockwise direction), while a second angle A2 can be defined between the second radial axis R2 of the respective second permanent magnet 222 and the first radial axis R1 of the other immediately adjacent first permanent magnet 221 (e.g., in the counter-clockwise direction). In non-limiting aspects, the first angle A1 and second angle A2 are non-equal angles. In some non-limiting aspects, a difference between the first angle A1 and the second angle A2 can be based on the circumferential stator slot pitch 228 between adjacent stator slots. For example, in one instance, the set of second magnets 222 can be circumferentially offset with respect to the set of first magnets 221 by an amount substantially equal to one half of the circumferential stator slot pitch 228. In such an instance, the difference between the first angle A1 and the second angle A2 can thus be substantially equal to the circumferential stator slot pitch 238.

As discussed herein, during power-generating operations, the rotor assembly 212, specifically the rotatable element 213, is mechanically powered, driven, or rotated by a force such as a mechanical energy. As the set of first permanent magnets 221 and the set of second permanent magnets 222, are ultimately coupled to the rotatable element 213, the set of first permanent magnets 221 and the set of second permanent magnets 222 will co-rotate with the rotatable element 213. The relative rotational motion of the rotatable element 213 and the co-rotating components, including at least the set of first permanent magnets 221 and the set of second permanent magnets 222, relative to the fixed or stationary stator assembly 224, generates electrical power due to the interaction with the magnetic field generated by the set of first permanent magnets 221 and the set of second permanent magnets 222.

It is contemplated that the circumferentially offset or asymmetrically spaced set of second permanent magnets 222 with respect to the set of first permanent magnets 221 can provide various benefits to the electric machine when compared to a conventional electric machine having second permanent magnets 222 evenly spaced with respect to the set of first permanent magnets 221. Specifically, the offset or unevenly spaced set of second permanent magnets 222 with respect to the set of first permanent magnets 221 can decrease the harmonic distortion generated by the rotor assembly 212 and a stator assembly 224, decrease the cogging torque and further decrease the ripple torque. This ultimately can increase the efficiency of the electric machine 201 when compared to conventional techniques.

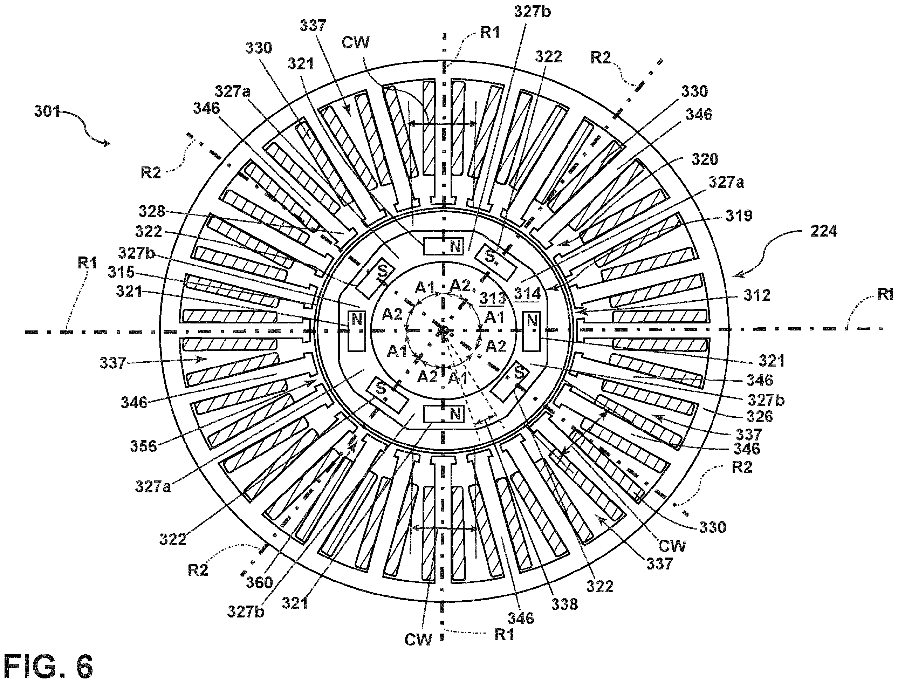

FIG. 6 is a simplified cross-section view of a non-limiting aspect of an IPM type electric machine 301. The exemplary aspect of FIG. 6 is similar to the aspect depicted in FIG. 5, therefore, like parts in the illustration of FIG. 6 are identified with the same reference numbers as in FIG. 5, incremented by 100. One notable difference between the non-limiting aspect of the SPM type electric machine 201 depicted in FIG. 5, and the IPM type electric machine 301 depicted in FIG. 6, is that while the SPM type electric machine 201 employs the set of first permanent magnets 221 and the set of second permanent magnets 222 alternately spaced over the periphery 219 of the rotatable element 213, the IPM type electric machine 301depicted in FIG. 6 employs the set of first permanent magnets 221 and the set of second permanent magnets 222 alternately spaced circumferentially within the rotor core 214. The IPM type electric machine 301 can be a synchronous motor or generator, including a rotor assembly 312 and a stator assembly 324. It will be appreciated that the rotor assembly 312 and stator assembly 324 of the electric machine 301 can be any suitable rotor or stator, respectively, for any suitable electric machine. For example, the rotor assembly 312 can be, but is not limited to, the main machine rotor 52, exciter rotor 62, the PMG rotor 72, or any other suitable rotor such as, but not limited to, an IPM rotor. The stator assembly 324 can be, but is not limited to, the main machine stator 54, exciter stator 64, the PMG stator 74, or any other suitable stator such as, but not limited to, an IPM stator. Similarly, the electric machine 301 can be any suitable machine such as, but not limited to, the generator 14, an electric motor, or a starter/generator.

The rotatable element 313 can be provided within the rotor assembly 312. The rotatable element 313 can comprise any suitable element configured to rotate about the rotational axis 341 such as, but not limited to, a drive shaft (e.g., the drive shaft 40), or a rotor core 314 fixed relative to the drive shaft and configured to co-rotate with the drive shaft. The rotatable element 313 can extend from the rotational axis 341 in the radial direction to the periphery 319 opposite an inner portion.

The set of first permanent magnets 321 can have the first polarity (e.g., an N-polarity), and the set of second permanent magnets 322 can have the second polarity (e.g., an S-polarity). The set of first permanent magnets 321 and the set of second permanent magnets 322 can include, but is not limited to, permanent magnetics, electromagnets, magnetically permeable material, or any combination thereof.

The set of first permanent magnets 321 and the set of second permanent magnets 322 can be can be disposed within the rotor core 314 through any suitable coupling method such as, but not limited to, adhesion, welding, fastening, or any combination thereof. Additionally, or alternatively, at least a portion of the set of first permanent magnets 321 or the set of second permanent magnets 322 can be disposed within a set of slots defined within the rotor core 314.

The set of first permanent magnets 321 and the set of second permanent magnets 322 can be alternately arranged and spaced with respect to each other. For example, the set of first permanent magnets 321 and the set of second permanent magnets 322 can be arranged in a circumferentially alternating pattern (relative the rotational axis 341) such that a second permanent magnet 322 is provided between any two adjacent first permanent magnets 321, and vice versa. For example, each second permanent magnet 322 can be disposed circumferentially between a respective pair of first permanent magnets 321.

As illustrated, the set of first permanent magnets 321 and the set of second permanent magnets 322 can extend in the circumferential direction along a cross section of the rotor core 314, however, it will be further appreciated that the set of first permanent magnets 321 and the set of second permanent magnets 322 can also extend in the axial direction along the rotor core 314. Specifically, the set of first permanent magnets 321 and the set of second permanent magnets 322 can extend in the axial direction parallel to the rotational axis 341.

The set of first permanent magnets 321 can be circumferentially evenly spaced from each other, based on at a first equal interval between each successive first permanent magnet 321. Likewise, the set of second permanent magnets 322 can be circumferentially evenly spaced from each other, based on at a second equal interval between each successive second permanent magnet 322. However, in non-limiting aspects, the set of second permanent magnets 322 are circumferentially offset or unevenly spaced with respect to the set of first permanent magnets 321.

Due to the circumferentially alternating pattern between the set of first permanent magnets 321 and the set of second permanent magnets 322, each second permanent magnet 322 is disposed circumferentially between two respective adjacent first permanent magnets 321. Additionally, due to the circumferentially uneven spacing between the first and second permanent magnets 321, 322, the set of first gap regions 327a can be defined between each respective second permanent magnet 322 and one respective immediately adjacent first permanent magnet 321. Furthermore, the set of second gap regions 327b can be defined between each respective second permanent magnet 322 and the other respective immediately adjacent first permanent magnet 321. The first gap regions 327a can each be the same size, and the second gap regions 327b can each be the same size. In non-limiting aspects, the first gap regions 327a can be a different size than the second gap regions 327b. For example, the first gap regions 327a are larger (e.g., greater circumferential length) than the second gap regions 327b.

In non-limiting aspects, the rotor assembly 312 can have a quantity N of first permanent magnets 321, and have a quantity M of second permanent magnets 222. In such aspects, the first permanent magnets 321 can be spaced from each other at an angular first interval defined by 360-degrees/N, and the second permanent magnets 322 can be spaced from each other at an angular second interval defined by 360-degrees/M. The second permanent magnets 322 can be circumferentially offset or unevenly spaced with respect to the set of first permanent magnets 321.

For instance, as illustrated, some non-limiting aspects can be arranged having eight magnets 320 including four first permanent magnets 321 and four second permanent magnets 322. In such an aspect, each successive first permanent magnet 321 can be spaced at 90-degree intervals from each other, and the set of second permanent magnets 322 can be spaced at 90-degree intervals from each other. However, the set of second permanent magnets 322 are circumferentially unevenly spaced from respective adjacent first permanent magnets 321. The respective first gap regions 327a can be defined between each second permanent magnet 322 and an immediately adjacent (e.g., in a clockwise direction) respective first permanent magnet 321, and the second gap regions 327b can be defined between each second permanent magnet 322 and the other immediately adjacent (e.g., in a counter-clockwise direction) respective first permanent magnet 321.

For example, in non-limiting aspects, each of the magnets 320 can define the respective circumferential width CW having a respective permanent magnet 320 circumferential center CC therebetween. In non-limiting aspects, the respective circumferential width CW of each of the magnets 320 can be substantially equal. The respective first radial axis R1 can extend from the rotational axis 341 through each respective first permanent magnet 321 circumferential center CC. A respective second radial axis R2 can extend from the rotational axis 241 through each respective second permanent magnet 222 circumferential center CC. In this way, due to the circumferentially uneven spacing, and alternating pattern, between the first and second permanent magnets 321, 322, the first angle A1 can be defined between the second radial axis R2 of each respective second permanent magnet 322 and the first radial axis R1 of an immediately adjacent first permanent magnet 321 (e.g., in the clockwise direction), while the second angle A2 can be defined between the second radial axis R2 of the respective second permanent magnet 322 and the first radial axis R1 of the other immediately adjacent first permanent magnet 321 (e.g., in the counter-clockwise direction). In non-limiting aspects, the first angle A1 and second angle A2 are non-equal angles.

As discussed herein, during power-generating operations, the rotor assembly 312, specifically the rotatable element 313, is mechanically powered, driven, or rotated by a force such as a mechanical energy. As the set of first permanent magnets 321 and the set of second permanent magnets 322, are ultimately coupled to the rotatable element 313, the set of first permanent magnets 321 and the set of second permanent magnets 322 will co-rotate with the rotatable element 313. The relative rotational motion of the rotatable element 313 and the co-rotating components, including at least the set of first permanent magnets 321 and the set of second permanent magnets 322, relative to the fixed or stationary stator assembly 324, generates electrical power due to the interaction with the magnetic field generated by the set of first permanent magnets 321 and the set of second permanent magnets 322.

It is contemplated that the circumferentially offset or asymmetrically spaced set of second permanent magnets 322 with respect to the set of first permanent magnets 321 can provide various benefits to the electric machine when compared to a conventional electric machine having second permanent magnets 322 evenly spaced with respect to the set of first permanent magnets 321. Specifically, the offset or unevenly spaced set of second permanent magnets 322 with respect to the set of first permanent magnets 321 can decrease the harmonic distortion generated by the rotor assembly 312 and a stator assembly 324, decrease the cogging torque and further decrease the ripple torque. This ultimately can increase the efficiency of the electric machine 301 when compared to conventional techniques.

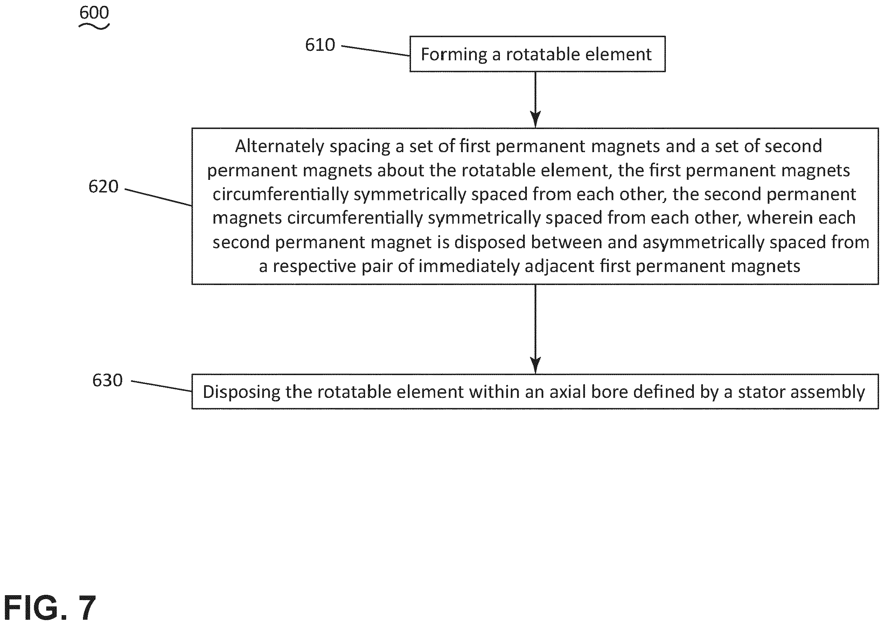

FIG. 7 is a non-limiting example of a method 600 of assembling non-limiting aspects of an the electric machine such as the electric machines 201, 301 of FIGs. 5 and 6. Although described in terms of the rotor assembly 212, 312 (rotatable element 213, 313) and a stator assembly 224, 324 it will be appreciated that the methods described can be applied to any other suitable rotor and stator assembly.

The method 600 can begin with forming the rotatable element 213, 313 at step 610. The rotatable element 213, 313 can define a rotational axis 241, 314 and a periphery 219, 319. The rotatable element 213, 313 can be provided within the rotor assembly 212, 313. The rotatable element 213, 313 can be any suitable element configured to rotate about the rotational axis 241, 341 such as, but not limited to, a drive shaft (e.g., the drive shaft 40), or a rotor core fixed relative to the drive shaft and configured to co-rotate with the drive shaft. The rotatable element 213, 313 can extend from the rotational axis 241, 314 in the radial direction to the periphery 219, 319 opposite an inner portion. The periphery 219, 319 can define a surface provided along an outer radial limit of the rotatable element 213, 313. As illustrated, the rotatable element 213, 313 can be formed as a ring such that the periphery 219, 313 is defined by an outer circumference of the ring.

The set of first permanent magnets 221, 321 and the set of second permanent magnets 222, 322 can then be alternately spaced around the rotatable element 213, 313 such that the first permanent magnets 221, 321 are circumferentially evenly spaced from each other, the second permanent magnets 222, 322 are circumferentially evenly spaced from each other, and each second permanent magnet 222, 322 is disposed between, and unevenly spaced from a respective pair of immediately adjacent first permanent magnets 221, 321at step 620. In non-limiting aspects, the set of first permanent magnets 221 and the set of second permanent magnets 222 can be alternately spaced around the rotatable element 213 over the periphery 219, of the rotatable element 213.

A set of first gap regions 227a, 327a can be defined between each respective second permanent magnet 222, 322 and a respective immediately adjacent first permanent magnet 221, 321. A set of second gap regions 227b, 327b can be defined between each respective second permanent magnet 222, 322 and the other respective immediately adjacent first permanent magnet 221, 321. The first gap regions 227a, 327a can each be the same size, and the second gap regions 227b, 327b can each be the same size. In non-limiting aspects, the first gap regions 227a, 327a can be a different size than the second gap regions 227b, 327b.

The set of first permanent magnets 221, 321 can have a first polarity (e.g., an N-polarity), and the set of second permanent magnets 222, 322 can have a second polarity (e.g., an S-Polarity). In non-limiting aspects, the second polarity can be opposite the first polarity. The set of first permanent magnets 221, 321 and the set of second permanent magnets 222, 322 can include, but is not limited to, permanent magnetics, electromagnets, magnetically permeable material, or any combination thereof.

The set of first permanent magnets 221, 321 and the set of second permanent magnets 222, 322 can be can be coupled to the periphery 219, 319 of the rotatable element 213, 313 through any suitable coupling method such as, but not limited to, adhesion, welding, fastening, or any combination thereof. Additionally, or alternatively, at least a portion of the set of first permanent magnets 221, 321 or the set of second permanent magnets 222, 322 can be integrally formed with the rotatable element 213, 313.

The method 600 can include, at step 630, disposing the rotatable element 213, 313 within an axial bore 256, 356 defined by a stator assembly 224, 324. The stator assembly 224, 324 can circumscribe the rotor assembly 212, 312. The stator assembly 224, 324 can include a stator casing 226, 326. A set of circumferentially spaced, posts or stator teeth 246, 346 can be formed within the stator casing 226, 326. The stator teeth 246, 346 can extend radially inwardly from the stator casing 226, 326 to a respective distal tip 228, 328. The stator teeth 246, 346 cooperatively define the axial bore 256, 356 through the stator assembly 224, 324. The rotor assembly 212, 312 can be rotatably disposed in the axial bore 256, 356. The air gap 260, 360 can be defined between the rotor assembly 212, 312 and the stator assembly 224, 324. For example, the air gap 260, 360 can be defined between an outer radial limit of the rotor assembly 212, 312 (e.g., at the containment band 215, 315) and an inner radial limit of the stator assembly 224, 324 (e.g., the distal tips 228, 328 of the stator teeth 246, 346). A set of windings or stator windings 230, 330, similar to the set of stator windings 90 described herein, can be wound about the set of stator teeth 246, 346. The stator teeth 246, 346 can be can be evenly circumferentially spaced from each other to define a set of stator slots 237, 337 therebetween. Each stator slot 237, 337 can define a circumferential stator slot pitch 238, 338. In non-limiting aspects, the stator teeth 246, 346 can be circumferentially spaced at an equal angular interval with respect to each other to define the set of stator slots 237, 337 having a common circumferential stator slot pitch 238, 338.

The sequence depicted is for illustrative purposes only and is not meant to limit the method 600 in any way as it is understood that the portions of the method can proceed in a different logical order, additional or intervening portions can be included, or described portions of the method can be divided into multiple portions, or described portions of the method can be omitted without detracting from the described method.

Advantages of the aspects as disclosed herein include a decreased harmonic distortion, cogging torque, and output voltage ripple, without an increased complexity in manufacturing when compared to conventional electric machines. For example, conventional rotor and stator assemblies can rely on skewing of either the magnetic materials on the rotor or the stator to reduce the harmonic distortion, cogging torque, output voltage ripple, and eddy current losses. However, this adds a layer of complexity when it comes to the manufacturing of the conventional rotor and stator assemblies as embedded components (e.g., the stator windings / posts, the set of magnetic materials or the set of non-magnetic materials) need to be skewed with respect to the rotational axis during manufacturing. The aspects as described herein, specifically the rotor assembly including a set of first permanent magnets and a set of second permanent magnets arranged asymmetrically with respect to each other can decreases the harmonic distortion, cogging torque, output voltage ripple, and eddy current losses without adding a large complexity in manufacturing when compared to the conventional rotor and stator assemblies with a skew.

Additionally, the cost of manufacturing the rotor and stator assembly in accordance with aspects as described herein is reduced when compared to traditional rotor and stator assemblies as less material, specifically magnetic material is required. This is because, for at least the reasons listed in the sections above, the electric machine including the aspects as described herein can have a higher voltage output with less ripple, than conventional rotor and stator assemblies. This, in turn, means that the rotor and stator assembly in accordance with various aspects can be smaller and include less magnetic materials while at the same time producing the same, if not more, voltage output and power density as the larger conventional rotor and stator assembly. For at least the reasons above, this can decrease the total cost associated with manufacturing the rotor and stator assembly without sacrificing performance parameters (e.g., power density and voltage output).

Yet another advantage includes a reduction in stator windings or end turns within the stator assembly when compared to conventional rotor/stator assemblies. Specifically, for at least the reasons in the section above, the rotor and stator assembly as described herein can increase the voltage output and power density, which means fewer amount of stator windings that have to present within the stator assembly to produce the same amount output voltage or power density when compared to the conventional rotor and stator assemblies.

As stator windings are normally made form copper, the reduction in the amount of winding turns to achieve a given voltage means a reduction in the total amount of copper losses within the system is made possible by using the freed space to increase the size of the conductors, and ultimately increases the power density of the electric machine. Further yet, a reduction in the amount of stator windings, enables the reduction of end turn lengths which improves the performance of a machine and also means a reduction in manufacturing cost and complexity as a lesser number of stator turns are needed to generate the same amount of voltage output and power density as the conventional rotor/stator assembly.

Additionally, for at least the reasons listed in the sections above, the electric machine including the aspects as described herein can reduce the ripple in the voltage output signal from the electric machine, compared to conventional electric machines. This can provide a cleaner or less noisy voltage output signal, both before and after rectification of the voltage output from the electric machine.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

To the extent not already described, the different features and structures of the various aspects can be used in combination with each other as desired. That one feature cannot be illustrated in all of the aspects is not meant to be construed that it cannot be, but is done for brevity of description. Thus, the various features of the different aspects can be mixed and matched as desired to form new aspects, whether or not the new aspects are expressly described. Combinations or permutations of features described herein are covered by this disclosure. Further aspects of the disclosure are provided by the subject matter of the following clauses:
1. A rotor assembly 212, 312 comprising: a rotor core 214, 314 having a set of first permanent magnets 221, 321 having first magnetic polarity (N) disposed around a circumference of the rotor core 214, 314 and circumferentially evenly spaced with respect to each other at an angular first interval; a set of second permanent magnets 222, 322 having a second magnetic polarity (S) disposed around the circumference of the rotor core 214, 314 and circumferentially evenly spaced with respect to each other at an angular second interval; wherein the set of second permanent magnets 222, 322 are unevenly spaced with respect to the set of first permanent magnets 221, 321.
2. The rotor assembly 212, 312 of any preceding clause, wherein the first magnetic polarity N is opposite the second magnetic polarity (S).
3. The rotor assembly 212, 312 of any preceding clause, wherein the first permanent magnets 221, 321 and second permanent magnets 222, 322 are alternatingly circumferentially arranged with respect to each other.
4. The rotor assembly 212, 312 of any preceding clause, wherein the first interval is equal to 360/N wherein N is equal to a quantity of first permanent magnets 221, 321.
5. The rotor assembly 212, 312 of any preceding clause, wherein the second interval is equal to 360/M wherein M is equal to a quantity of second permanent magnets 222, 322.
6. The rotor assembly 212, 312 of any preceding clause, wherein each second permanent magnet 222, 322 is disposed between a respective pair of immediately adjacent first permanent magnets 221, 321, wherein a first angle A1 is between a second radial axis R2 of the second permanent magnet 222, 322 and a first radial axis R1 of a first one of the immediately adjacent first permanent magnets 221, 321; wherein a second angle A2 is between the second radial axis R2 of the second permanent magnet 222, 322 and a first radial axis R1 of a second one of the immediately adjacent first permanent magnets 221, 321; and wherein the first angle A1 is greater than the second angle A2.
7. The rotor assembly 212, 312 of any preceding clause, wherein a difference between the first angle A1 and the second angle A2 is based on a circumferential stator slot pitch 228, 328 between adjacent stator slots 237, 337.
8. An electric machine 14 comprising: a rotor core 214, 314 having a set of first permanent magnets 221, 321 having first magnetic polarity N disposed around a circumference of the rotor core 214, 314 and circumferentially evenly spaced with respect to each other at an angular first interval; a set of second permanent magnets 222, 322 having a second magnetic polarity S disposed around the circumference of the rotor core 214, 314 and circumferentially evenly spaced with respect to each other at an angular second interval; a stator assembly 224, 32 having a set of stator teeth 246, 346 circumscribing the rotor core 214, 314, the stator teeth 246, 346 evenly spaced at an angular third interval to define a set of stator slots 237, 337 therebetween; wherein the set of second permanent magnets 222, 322 are unevenly spaced with respect to the set of first permanent magnets 221, 321.
9. The electric machine 14 of any preceding clause, wherein the first permanent magnets 221, 321 and second permanent magnets 222, 322 are alternatingly circumferentially arranged with respect to each other.
10. The electric machine 14 of any preceding clause, wherein each second permanent magnet 222, 322 is disposed between a respective pair of immediately adjacent first permanent magnets 221, 321, and wherein a first angle A1 is between a second radial axis R2 of the second permanent magnet 222, 322 and a first radial axis R1 of a first one of the immediately adjacent first permanent magnets 221, 321; and wherein a second angle A2 is between the second radial axis R2 of the second permanent magnet 222, 322 and a first radial axis R1 of the a second one of the immediately adjacent first permanent magnets 221, 321;wherein the first angle A1 is greater than the second angle A2.
11. The electric machine 14 of any preceding clause, wherein the first interval is equal to 360/N wherein N is a quantity of first permanent magnets 221, 321.
12. The electric machine 14 of any preceding clause, wherein the second interval is equal to 360/M wherein M is a quantity of second permanent magnets 222, 322.
13. The electric machine 14 of any preceding clause, further comprising a set of windings 230, 330 wound about the set of stator teeth 246, 346 and disposed in the set of stator slots 237, 337.
14. The electric machine 14 of any preceding clause, wherein the set of stator slots 237, 337 define a common respective circumferential stator slot pitch 238, 338.
15. The electric machine 14 of any preceding clause, wherein a difference between the first angle A1 and the second angle A2 is equal to the circumferential stator slot pitch 238, 338.
16. The electric machine 14 of any preceding clause, wherein a difference between the first angle A1 and the second angle A2 is based on the circumferential stator slot pitch 238, 338.
17. The electric machine 14 of any preceding clause, wherein the electric machine 14 is at least one of a motor, a generator, and a starter/generator.
18. The electric machine 14 of any preceding clause, wherein the electric machine 14 is at least one of a Permanent Magnet Generator (PMG), a Surface Permanent Magnet (SPM) generator, and an Interior Permanent Magnet (IPM) generator.
19. A method 600 of assembling an electric machine 14, the method 600 comprising; forming a rotatable element 213, 313 defined by a periphery 219, 319; alternately spacing a set of first permanent magnets 221, 321 and a set of second permanent magnets 222, 322 about the rotatable element 213, 313, the first permanent magnets 221, 321 circumferentially evenly spaced from each other, the second permanent magnets 222, 322 circumferentially evenly spaced from each other, wherein each second permanent magnet 222, 322 is disposed between and unevenly spaced from a respective pair of immediately adjacent first permanent magnets 221, 321.
20. The method 600 of any preceding clause, further comprising the step of disposing the rotatable element 213, 313 within an axial bore 256, 356 defined by a stator assembly 224, 324

## Claims

1. A rotor assembly (212) comprising:
a rotor core (214) having a set of first permanent magnets (221) having first magnetic polarity (N) disposed around a circumference of the rotor core (214) and circumferentially symmetrically spaced with respect to each other at an angular first interval;
a set of second permanent magnets (222) having a second magnetic polarity (S) disposed around the circumference of the rotor core (214) and circumferentially symmetrically spaced with respect to each other at an angular second interval;
wherein the set of second permanent magnets (222) are asymmetrically spaced with respect to the set of first permanent magnets (221).

2. The rotor assembly (212) of claim 1, wherein the first permanent magnets (221) and second permanent magnets (222) are alternatingly circumferentially arranged with respect to each other.

3. The rotor assembly (212) of any preceding claim, wherein the first interval is equal to 360/N wherein N is equal to the quantity of first permanent magnets (221).

4. The rotor assembly (212) of any preceding claim, wherein the second interval is 360/M wherein M is equal to the quantity of second permanent magnets (222).

5. The rotor assembly (212) of any preceding claim, wherein each second permanent magnet (222) is disposed between a respective pair of immediately adjacent respective first permanent magnets (221), wherein a respective first angle (A1) between a respective second radial axis (R2) of each second permanent magnet (222) and a respective first radial axis (R1) of one of the immediately adjacent respective first permanent magnets (221) is greater than a respective second angle (A2) between the second radial axis (R2) of each second permanent magnet (222) and the respective first radial axis (R1) of the other immediately adjacent respective first permanent magnet (221).

6. An electric machine (14) comprising:
a rotor core (214) having a set of first permanent magnets (221) having first magnetic polarity (N) disposed around a circumference of the rotor core (214) and circumferentially symmetrically spaced with respect to each other at an angular first interval;
a set of second permanent magnets (222) having a second magnetic polarity (S) disposed around the circumference of the rotor core (214) and circumferentially symmetrically spaced with respect to each other at an angular second interval;
a stator (224) having a set of stator teeth (246) circumscribing the rotor core (214), the stator teeth (246) circumferentially spaced at an angular third interval to define a set of stator slots (237) therebetween;
wherein the set of second permanent magnets (222) are asymmetrically spaced with respect to the set of first permanent magnets (221).

7. The electric machine (14) of claim 6, wherein the first permanent magnets (221) and second permanent magnets (222) are alternatingly circumferentially arranged with respect to each other.

8. The electric machine (14) of claim 7, wherein each second permanent magnet (222) is disposed between a pair of immediately adjacent respective first permanent magnets (221), and wherein a respective first angle (A1) between a respective second radial axis (R2) of each second permanent magnet (222) and a respective first radial axis (R1) of one of the immediately adjacent respective first permanent magnets (221) is greater than a respective second angle (A2) between the second radial axis (R2) of each second permanent magnet (222) and the respective first radial axis (R1) of the other immediately adjacent respective first permanent magnet (221).

9. The electric machine (14) of any of claims 6 to 8, wherein the first interval is = to 360/N wherein N is the quantity of first permanent magnets (221).

10. The electric machine (14) of any of claims 6 to 9, wherein the second interval is 360/M wherein M is the quantity of second permanent magnets (222).

11. The electric machine (14) of any of claims 6 to 10, further comprising a set of windings (230) wound about the set of stator teeth (246) and disposed in the set of stator slots (237).

12. The electric machine (14) of any of claims 6 to 11, wherein the set of stator slots (237) define a common respective circumferential stator slot pitch (238).

13. The electric machine (14) of claim 12, wherein a difference between the first angle (A1) and the second angle (A2) is substantially equal to 50% of the circumferential stator slot pitch (238).

14. The electric machine (14) of claim 12, wherein a difference between the first angle (A1) and the second distance (A2) is within a range of between 25% and 75% of the circumferential stator slot pitch (238).

15. A method (600) of assembling an electric machine (14), the method (600) comprising;
forming a rotatable element (213) defined by a periphery (219);
alternately spacing a set of first permanent magnets (221) and a set of second permanent magnets (222) about the periphery (219), the first permanent magnets (221) circumferentially symmetrically spaced from each other, the second permanent magnets (222) circumferentially symmetrically spaced from each other, wherein each second permanent magnet (222) is disposed between and asymmetrically spaced from a respective pair of immediately adjacent first permanent magnets (221).
